# EUROPÄISCHE PATENTANMELDUNG

(11) **EP 1 107 046 A2**
(43) Veröffentlichungstag der Anmeldung: **13.06.2001**
(21) Anmeldenummer: 00125901.9
(22) Anmeldetag: 27.11.2000
(51) Int. Cl.: G02F 1/133, G02F 1/1347, G02F 1/13363

(54) **Anzeigeeinrichtung**

(30) Priorität: 03.12.1999 DE 19958354
(71) Anmelder: Mannesmann VDO AG, 60388 Frankfurt am Main (DE)
(72) Erfinder: Brandt, Peter, 63739 Aschaffenburg (DE)
(74) Vertreter: Klein, Thomas, Dipl.-Ing. (FH)

(57) **Zusammenfassung**

Bei einer Anzeigeeinrichtung (1), welche mit einer durch eine erste Flüssigkristallzelle (2) und eine zweite Flüssigkristallzelle (3) gebildeten DSTN-Zelle ausgestattet ist, ermöglicht eine Heizvorrichtung (6) die Erwärmung der Anzeigevorrichtung (1) bei niedrigen Umgebungstemperaturen. Die Heizvorrichtung (6) ist hierzu zentral zwischen den Flüssigkristallzellen (2, 3) angeordnet, so daß die Erwärmung der Flüssigkristallzellen (2, 3) gleichmäßig ohne Temperaturdifferenzen erfolgen kann. Dabei ist eine Überhitzung temperaturempfindlicher Bestandteile der Flüssigkristallzellen (2, 3), insbesondere eines Polarisationsfilters, weitgehend ausgeschlossen. Zugleich wird dabei der Herstellungsaufwand wesentlich reduziert, indem die Heizvorrichtung (6) ohne konstruktive Änderungen der Flüssigkristallzellen (2, 3) in einfacher Weise auch nachträglich zwischen ihnen eingesetzt werden kann.

## Beschreibung

Die Erfindung betrifft eine Anzeigeeinrichtung, insbesondere in einem Kraftfahrzeug, mit zwei optisch in Reihe angeordneten Flüssigkristallzellen und mit einer Heizvorrichtung.

Bei solchen mit der Flüssigkristallzelle ausgestatteten Anzeigeeinrichtungen, die zumindest zeitweise bei niedrigen Umgebungstemperaturen betrieben werden, wie dies beispielsweise bei Anzeigeeinrichtungen in Kraftfahrzeugen der Fall ist, tritt das Problem auf, daß bei tiefen Temperaturen die Schaltzeiten unerwünscht groß werden, so daß die damit ausgestatteten Anzeigeeinrichtungen eine erhebliche Trägheit annehmen. Um diesem Mißstand abzuhelfen, ist es bekannt, die Abwärme einer der Beleuchtung der Flüssigkristallzelle der Anzeigeeinrichtung dienenden Lichtquelle zu nutzen. Mittels der von der Lichtquelle abgestrahlten Wärme wird die Flüssigkristallzelle erwärmt und auf dem erforderlichen Temperaturniveau gehalten, wodurch es trotz niedriger Umgebungstemperaturen möglich wird, die Anzeigeeinrichtung mit den erforderlichen Schaltzeiten zu betreiben. Aufgrund des relativ großen Abstandes zwischen der Lichtquelle und der Flüssigkristallzelle ist eine vergleichsweise hohe Energiezufuhr und damit eine große Wärmeabstrahlung erforderlich. Dabei wirkt sich nachteilig aus, daß durch die Wärmeabstrahlung in unerwünschter Weise auch die übrigen Bauelemente der Anzeigeeinrichtung erwärmt werden. Hierbei erweist sich vor allem die Temperaturempfindlichkeit der Polarisationsfilter der Flüssigkristallzelle als problematisch. Weiterhin erreicht die Lichtquelle bei Inbetriebnahme erst nach einer gewissen Vorlaufzeit die erforderliche Betriebstemperatur, die eine Nutzung der Abwärme in der beschriebenen Weise ermöglicht. Diese zeitliche Verzögerung ist daher mit einer äußerst schlechten Ablesbarkeit der Anzeigeeinrichtung verbunden.

Es sind auch Lösungsvorschläge bekannt, bei denen ein dünner, außenseitig an der Flüssigkristallzelle, beispielsweise auf einem Polarisationsfilter, angeordneter Heizdraht zur Erwärmung der Anzeigeeinrichtung verwendet wird. Diese Anordnung ist mit dem Nachteil behaftet, daß die Erwärmung auch solche Bauelemente der Anzeigeeinrichtung oder benachbarter Anzeigen einschließt, deren übermäßige Erwärmung zu Schäden führen kann. Außerdem ist, die Ablesbarkeit der Anzeige nachhaltig störend, die Kontur des Drahtes in der Darstellung sichtbar.

Es ist weiterhin bereits bekannt, die Heizvorrichtung der Anzeigeeinrichtung innerhalb des Zellenraumes der Flüssigkristallzelle, insbesondere unmittelbar an einer Zellenwand, anzuordnen, um so eine schnelle und direkte Erwärmung zu erreichen. Als hinderlich hat sich dabei erwiesen, daß hierdurch zunächst ein zusätzlicher Aufwand für eine elektrische Isolationsschicht entsteht. Weiterhin liegt die Heizvorrichtung bei der beschriebenen Anordnung in unmittelbarer Nähe eines der beiden Polarisationsfilter, mithin ist dieser lediglich durch die elektrische Isolationsschicht von der Heizvorrichtung getrennt. Die Ansteuerung muß dadurch sehr sorgfältig und mit gebotener Vorsicht erfolgen, um Schäden von dem temperaturempfindlichen Polarisationsfilter abzuwenden.

Dabei ist ferner zu berücksichtigen, daß in dem Fall, in dem zwei optisch in Reihe angeordnete Flüssigkristallzellen gleichmäßig erwärmt werden sollen, jeweils in jeder der beiden Flüssigkristallzellen eine Heizvorrichtung vorzusehen ist, die von einer Steuereinheit anzusteuern ist.

Der Erfindung liegt die Aufgabe zugrunde, eine Anzeigeeinrichtung der eingangs genannten Art so zu gestalten, daß die Flüssigkristallzellen bei niedrigen Temperaturen zuverlässig und mit lediglich geringem Aufwand mittels der Heizvorrichtung beheizbar sind. Dabei sollen insbesondere Schäden an einem Polarisationsfilter der Flüssigkristallzellen aufgrund von Überhitzung vermieden werden.

Dieses Aufgabe wird erfindungsgemäß dadurch gelöst, daß die Heizvorrichtung zwischen der einem Betrachter zugewandten ersten Flüssigkristallzelle und der zweiten Flüssigkristallzelle angeordnet ist. Hierdurch ist zur Beheizung der mit den beiden Flüssigkristallzellen gebildeten Anzeigeeinrichtung lediglich eine gemeinsame Heizvorrichtung erforderlich, wodurch der Herstellungsaufwand erheblich reduziert werden kann. Dabei ist die Heizvorrichtung außerhalb einer Zellenkammer der jeweiligen Flüssigkristallzelle angeordnet, so daß ein unmittelbarer Kontakt der Heizvorrichtung mit dem Flüssigkristall und/oder Ansteuerelektroden ausgeschlossen ist. Zudem kann ein unmittelbarer Kontakt mit einem Polarisationsfilter vermieden werden. Auch ist es ferner nicht erforderlich, eine elektrische oder thermische Isolationsschicht vorzusehen. Der Herstellungsaufwand kann dadurch weiter verringert werden, wobei insbesondere marktübliche Flüssigkristallzellen in einfacher Weise lediglich durch Nachrüstung der Heizvorrichtung angepaßt werden können, ohne daß hierzu ein Eingriff in den Aufbau der Flüssigkristallzelle als solcher notwendig wäre. Weiterhin ist eine ungleichmäßige Erwärmung der beiden Zellen und eine damit möglicherweise verbundene Farbverfälschung durch die zentrale Anordnung und die damit erreichbare gleichmäßige Lichtabstrahlung ausgeschlossen. Besonders vorteilhaft ist die erfindungsgemäße Einrichtung auch dadurch, daß eine Überschreitung einer maximalen Grenztemperatur von an die Anzeigeeinrichtung angrenzenden oder in dieser enthaltenen Bauteilen auch bei hohen Temperaturen sicher auszuschließen ist. Die erfindungsgemäße Anzeigeeinrichtung bietet sich vor allem für Kraftfahrzeuge an, da hier zur Gewährleistung einer hohen Verkehrssicherheit auch bei sehr niedrigen Umgebungstemperaturen eine schnelle und kontrastreiche Anzeige erforderlich ist. Insbesondere bei einem Einbau in eine Instrumententafel oder ein Kombinationsanzeigeinstrument eines Kraftfahrzeugs kommt zudem der Vorteil der geringen Wärmeabstrahlung der Anzeigeeinrichtung durch die sehr effektive Nutzung der Heizleistung der Heizvorrichtung besonders vorteilhaft zum Tragen.

Eine besonders vorteilhafte Ausführungsform der Erfindung ist auch dadurch gegeben, daß die Heizvorrichtung mit einer im sichtbaren Bereich der Anzeigeeinrichtung angeordneten transparenten Schicht ausgestattet ist. Hierdurch wird ein unerwünschter Schattenwurf an der Heizvorrichtung durch die transparente Beschaffenheit der Schicht verhindert. Der Lichtdurchtritt erfolgt daher störungsfrei, wobei insbesondere ein nach dem Stand der Technik im Zusammenhang mit einem Heizdraht oftmals erforderlicher Diffusor entfällt.

Die zentral zwischen den beiden Flüssigkristallzellen angeordnete Heizvorrichtung kann mittels einer externen Wärmequelle durch Wärmeübergang oder Wärmestrahlung beheizbar sein. Eine besonders vorteilhafte Weiterbildung der Erfindung ist hingegen dann erreicht, wenn die Heizvorrichtung ein transparentes elektrisches Widerstandselement aufweist, wobei die Abwärme des Widerstands zum Heizen genutzt wird. Hierdurch wird die Ansteuerung der Heizvorrichtung wesentlich erleichtert, die hierzu problemlos durch eine zentrale Steuereinheit erfolgen kann. In einfacher Weise kann dabei das Widerstandselement in Abhängigkeit der von einem Temperatursensor erfaßten Umgebungstemperatur (z.B. Fahrzeuginnenraumtemperatur) geschaltet werden. Die zur Bestimmung der Umgebungstemperatur erforderlichen Meßdaten können daher auch mittels einer Betriebsdatenerfassung, beispielsweise auch im Rahmen eines Fahrerinformationssystemes erfolgen, so daß die vorhandenen Einrichtungen sinnvoll genutzt werden können.

Eine andere, besonders sinnvolle Weiterbildung der Erfindung wird auch dadurch erreicht, daß sich das elektrische Widerstandselement im wesentlichen über die gesamte Querschnittsfläche der Anzeigeeinrichtung und mit in etwa einheitlichem Abstand zu den Flüssigkristallzellen erstreckt. Hierdurch können ungünstige elektrische Effekte, insbesondere die Ausbildung eines elektrischen Feldes, die zu Fehlfunktionen der Flüssigkristallzellen führen können, vermieden oder zumindest auf ein unerhebliches Maß reduziert werden, und es kann eine gleichmäßige Erwärmung beider Zellen erfolgen. Bei der Bestimmung des Abstands zu den Flüssigkristallzellen sind gegebenenfalls zwischen dem Widerstandselement und der jeweiligen Flüssigkristallzelle angeordnete, den Wärmeübergang und/oder ein elektrisches Feld beeinflussende Elemente zu berücksichtigen.

Eine andere, besonders einfache Ausgestaltung der Erfindung ist dann gegeben, wenn die Heizvorrichtung mit einem auf einer Scheibe aufgebrachten konduktiven Polymer ausgestattet ist. Hierdurch wird die Montage der Heizvorrichtung wesentlich erleichtert, indem beispielsweise lediglich die mit der Glasscheibe ausgestattete Heizvorrichtung zwischen den Flüssigkristallzellen eingesetzt wird. Das konduktive Polymer ermöglicht dabei durch eine gleichmäßige Wärmeabstrahlung einen hohen Wirkungsgrad, ohne hierbei den Strahlengang des nacheinander durch die erste Flüssigkristallzelle, dann durch die Scheibe und schließlich durch die zweite Flüssigkristallzelle hindurchtretenden Lichtes zu stören.

Besonders vorteilhaft ist eine Weiterbildung der erfindungsgemäßen Anzeigeeinrichtung, bei der das konduktive Polymer eine Lichttransmission von mindestens 90% aufweist. Dadurch erfolgt lediglich eine geringe Verminderung der Lichtintensität, so daß zur Beleuchtung der Flüssigkristallzellen eine übliche Lichtquelle mit niedriger Energieaufnahme verwendbar ist.

Für gängige Einsatzfälle ist es hinreichend, wenn das konduktive Polymer auf einer Seite der Scheibe aufgebracht ist. Insbesondere bei Verwendung der Anzeigeeinrichtung bei extrem niedrigen Umgebungstemperaturen und/oder wenn beide Flüssigkristallzellen in identischer Weise, d.h. mit gleicher Erwärmung in gleichen Zeiteinheiten, zu erwärmen sind, ist es jedoch sehr vorteilhaft, wenn das konduktive Polymer auf der der ersten Flüssigkristallzelle zugewandten Vorderseite der Scheibe und auf der der zweiten Flüssigkristallzelle zugewandten Rückseite der Scheibe angeordnet ist.

Die Scheibe könnte beispielsweise ein Transflektor und/oder ein Diffusor sein und somit unmittelbar Aufgaben für die Darstellung der erfindungsgemäßen Anzeigeeinrichtung übernehmen. Diese Darstellung wird jedoch vorteilhaft nicht beeinflußt und die Ausnutzung des von einer Beleuchtungseinrichtung der Anzeigeeinrichtung abgestrahlten Lichts ist besonders hoch, wenn die Scheibe transparent ist und damit einen ungehinderten Lichtdurchtritt zuläßt.

Die Kontaktelemente der Heizvorrichtung können außerhalb eines sichtbaren Bereiches der Flüssigkristallanzeige angeordnet sein. Eine besonders zweckmäßige Ausführungsform der Erfindung ist hingegen dann erreicht, wenn eine elektrische Kontaktierung der Heizvorrichtung transparent ausgeführt ist. Hierdurch wird eine geringe Baugröße der Heizvorrichtung erreicht, da außenliegende Kontaktierungen entfallen. Die Kontaktierung erfolgt hierzu beispielsweise mit transparenten Leiterbahnen, die im Inneren der Anzeigeeinrichtung, d.h. in ihrem Sichtbereich, mühelos angebracht werden können.

Eine andere, besonders vielseitige Ausgestaltung der Erfindung wird dadurch erreicht, daß die Heizvorrichtung als ein zwischen den Flüssigkristallzellen wahlweise einsetzbares Bauelement ausgeführt ist. Hierdurch wird ein individueller Einsatz der Heizvorrichtungen auch bei unterschiedlichen Betriebsbedingungen möglich. Beispielsweise ist der Einsatz der Heizvorrichtung lediglich bei solchen Kraftfahrzeugvarianten problemlos möglich, die für kalte geographische Gebiete bestimmt sind, wobei zusätzlich noch die Auswahl zwischen unterschiedlich leistungsfähigen Ausführungsformen der Heizvorrichtung gegeben ist. Zugleich können bereits vorhandene Anzeigeeinrichtungen mit der Heizvorrichtung mühelos nachgerüstet werden.

Die Ansteuerung der beiden Flüssigkristallzellen könnte derart erfolgen, daß jeweils eine der beiden Flüssigkristallzellen aktiv und die verbleibende Flüssigkristallzelle passiv angesteuert wird; die passiv angesteuerte Zelle dient dabei beispielsweise lediglich einer Kompensation von unerwünschten Farbeffekten. Eine besonders günstige Weiterbildung der Erfindung ist hingegen dann gegeben, wenn beide Flüssigkristallzellen der Anzeigeeinrichtung aktiv ansteuerbar sind. Die Ansteuerung beider Flüssigkristallzellen erfordert eine gleichmäßige Erwärmung der beiden Flüssigkristallzellen mittels der Heizvorrichtung, die durch die zentrale Anordnung der Heizvorrichtung optimal erfüllt werden kann. Der Einsatz ist daher ohne eine zusätzliche Erfassung der Ansteuerung der jeweiligen Flüssigkristallzelle möglich, so daß der Herstellungsaufwand weiter reduziert werden kann.

Gemäß einer anderen vorteilhaften Weiterbildung der Erfindung bilden die erste Flüssigkristallzelle und die zweite Flüssigkristallzelle eine DSTN (Double Super Twisted Nematic) -Zelle. Auf diese Weise kann eine besonders kontrastreiche Darstellung vielfältiger Informationen mit der Anzeigeeinrichtung auch unter einem großen Blickwinkel gewährleistet werden. Dabei können beide Zellen aktiv zur Darstellung gleicher oder unterschiedlicher Informationen angesteuert werden, oder es ist nur eine der Zellen zur Informationsdarstellung aktiv ansteuerbar, und die zweite Zelle dient einer Farbkompensation.

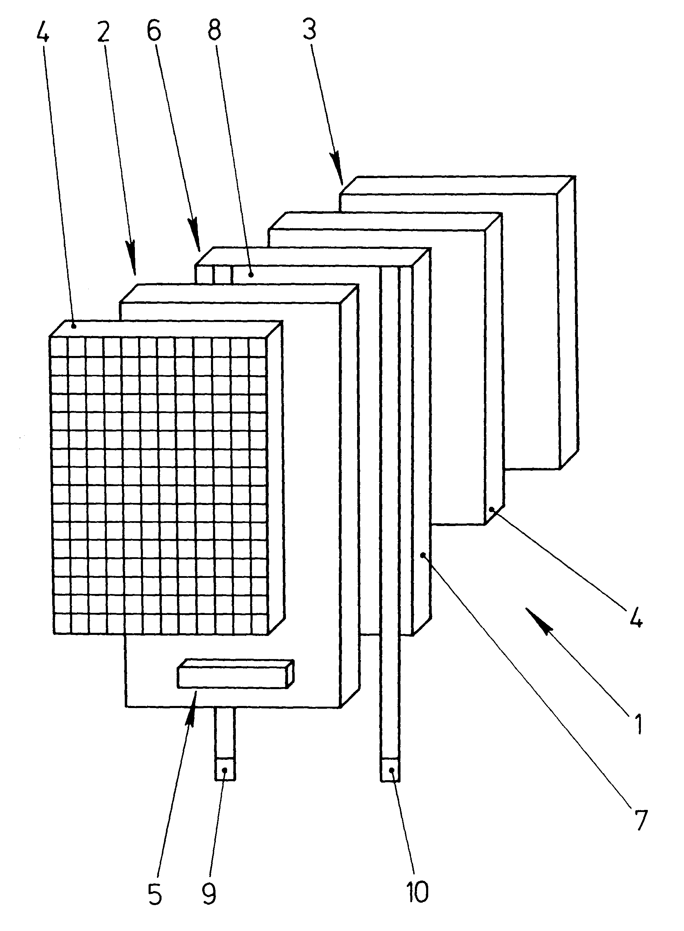

Die Erfindung läßt verschiedene Ausführungsformen zu. Zur weiteren Verdeutlichung ihres Grundprinzips ist eine davon in der Zeichnung dargestellt und wird nachfolgend beschrieben. Die Zeichnung zeigt in einer perspektivischen Skizze eine Anzeigeeinrichtung 1 mit einer durch eine erste, einem Betrachter zugewandte Flüssigkristallzelle 2 und durch eine zweite Flüssigkristallzelle 3 gebildeten DSTN-Zelle. Zwischen den beiden jeweils mit einem Segmentdisplay 4 und einer Steuerung 5 ausgestatteten Flüssigkristallzellen 2, 3 ist eine zentrale Heizvorrichtung 6 angeordnet. Diese Heizvorrichtung 6 hat hierzu eine im wesentlichen transparente Scheibe 7, auf der ein ebenfalls transparentes, als konduktives Polymer ausgeführtes Widerstandselement 8 derart angeordnet ist, daß es sich über die gesamte sichtbare Fläche der Anzeigeeinrichtung 1 und in einem im wesentlichen gleichbleibenden Abstand zu den Flüssigkristallzellen 2, 3 erstreckt. Hierdurch werden Rückwirkungen, insbesondere durch Ausbildung eines elektrischen Feldes, verhindert. Die Heizvorrichtung 6 hat weiterhin zwei außerhalb des sichtbaren Bereiches der Anzeigeeinrichtung 1 angeordnete Kontaktierungen 9, 10, die einen problemlosen Anschluß und damit eine einfache Nachrüstung der Heizvorrichtung 6 ermöglichen. Sind die Kontaktierungen 9, 10 transparent, so können sie auch innerhalb des Sichtbereichs der Anzeigeeinrichtung 1 angeordnet sein.

## Patentansprüche

1. Anzeigeeinrichtung, insbesondere in einem Kraftfahrzeug, mit zwei optisch in Reihe angeordneten Flüssigkristallzellen und mit einer Heizvorrichtung, **dadurch gekennzeichnet**, daß die Heizvorrichtung (6) zwischen der einem Betrachter zugewandten ersten Flüssigkristallzelle (2) und der zweiten Flüssigkristallzelle (3) angeordnet ist.

2. Anzeigeeinrichtung nach Anspruch 1, **dadurch gekennzeichnet,** daß die Heizvorrichtung (6) mit einer im sichtbaren Bereich der Anzeigeeinrichtung (1) angeordneten transparenten Schicht ausgestattet ist.

3. Anzeigeeinrichtung nach Anspruch 1 oder 2, **dadurch gekennzeichnet,** daß die Heizvorrichtung (6) ein transparentes elektrisches Widerstandselement (8) aufweist.

4. Anzeigeeinrichtung nach Anspruch 3, **dadurch gekennzeichnet,** daß sich das elektrische Widerstandselement (8) im wesentlichen über die gesamte Querschnittsfläche der Anzeigeeinrichtung (1) und mit in etwa einheitlichem Abstand zu den Flüssigkristallzellen (2, 3) erstreckt.

5. Anzeigeeinrichtung nach einem der vorhergehenden Ansprüche, **dadurch gekennzeichnet,** daß die Heizvorrichtung (6) mit einem auf einer Scheibe (7) aufgebrachten konduktiven Polymer ausgestattet ist.

6. Anzeigeeinrichtung nach Anspruch 5, **dadurch gekennzeichnet,** daß das konduktive Polymer eine Lichttransmission von mindestens 90% aufweist.

7. Anzeigeeinrichtung nach Anspruch 5 oder 6, **dadurch gekennzeichnet,** daß das konduktive Polymer auf der der ersten Flüssigkristallzelle (2) zugewandten Vorderseite der Scheibe (7) und auf der der zweiten Flüssigkristallzelle (3) zugewandten Rückseite der Scheibe (7) angeordnet ist.

8. Anzeigeeinrichtung nach einem der Ansprüche 5 bis 7, **dadurch gekennzeichnet,** daß die Scheibe (7) transparent ist.

9. Anzeigeeinrichtung nach einem der vorhergehenden Ansprüche, **dadurch gekennzeichnet,** daß eine elektrische Kontaktierung (9, 10) der Heizvorrichtung (6) transparent ausgeführt ist.

10. Anzeigeeinrichtung nach einem der vorhergehenden Ansprüche, **dadurch gekennzeichnet,** daß die Heizvorrichtung (6) als ein zwischen den Flüssigkristallzellen (2, 3) wahlweise einsetzbares Bauelement ausgeführt ist.

11. Anzeigeeinrichtung nach einem der vorhergehenden Ansprüche, **dadurch gekennzeichnet,** daß beide Flüssigkristallzellen (2, 3) der Anzeigeeinrichtung (1) aktiv ansteuerbar sind.

12. Anzeigeeinrichtung nach einem der vorhergehenden Ansprüche, **dadurch gekennzeichnet,** daß die erste Flüssigkristallzelle (2) und die zweite Flüssigkristallzelle (3) eine DSTN (Double Super Twisted Nematic) -Zelle bilden.
